# EUROPÄISCHE PATENTSCHRIFT

(11) **EP 3 784 554 B1**
(45) Veröffentlichungstag und Bekanntmachung des Hinweises auf die Patenterteilung: **07.06.2023**
(21) Anmeldenummer: 19716852.9
(22) Anmeldetag: 18.04.2019
(51) Int. Cl.: B62K 3/00, B62K 5/00, B62K 5/08, B62K 5/10, A63C 17/01

(54) **ROLLER UND VERFAHREN ZUM BEDIENEN EINES ROLLERS**
STEP SCOOTER AND METHOD
TROTTINETTE ET MÉTHODE

(30) Priorität: 23.04.2018 DE 102018206225
(43) Veröffentlichungstag der Anmeldung: 03.03.2021
(73) Patentinhaber: Audi AG, 85045 Ingolstadt (DE)
(72) Erfinder: VIRAG, Istvan, 85051 Ingolstadt (DE); REINWALD, Franz, 85055 Ingolstadt (DE); PÖPPEL, Christian, 93336 Altmannstein (DE); NEUMANN, Mathias, 85098 Großmehring (DE); KARMANN, Michael, 85104 Pförring (DE); ORDNER, Sebastian, 85055 Ingolstadt (DE)
(86) Internationale Anmeldenummer: PCT/EP2019/058367
(87) Internationale Veröffentlichungsnummer: WO 2019/206589

(56) Entgegenhaltungen:
- WO-A1-2017/035285
- DE-A1- 2 727 561
- DE-U1- 20 020 658
- DE-U1- 20 021 083
- DE-U1- 20 103 486
- DE-U1- 20 108 067
- US-A1- 2010 327 546

## Beschreibung

Die Erfindung betrifft einen Roller mit einem Trittbrett, durch welches eine Aufstandsfläche für einen Nutzer des Rollers bereitgestellt ist. Eine Vorderachse des Rollers umfasst ein erstes Vorderrad und ein zweites Vorderrad, und eine Hinterachse des Rollers umfasst ein erstes Hinterrad und ein zweites Hinterrad. Zum Lenken zumindest der Vorderräder ist eine Lenksäule vorgesehen. Des Weiteren betrifft die Erfindung ein Verfahren zum Bedienen eines solchen Rollers.

Im Handel sind Tretroller erhältlich, welche eine Vorderachse mit zwei Vorderrädern und eine Hinterachse mit zwei Hinterrädern umfassen, wobei zum Lenken des Rollers eine Lenksäule mit einem Lenker vorgesehen ist. Als nachteilig ist bei derartigen Rollern der Umstand anzusehen, dass sich beim Lenken lediglich ein vergleichsweise großer Kurvenradius erreichen lässt.

Die DE 200 20 658 U1, welche die Merkmale der Präambel der Ansprüche 1 und 8 zeigt, beschreibt ein Rollbrett mit einem als Standfläche dienenden Trittbrett und mit einer Lenkstange. Bei einem Kippen des Trittbretts zur Erzeugung eines Lenkausschlags werden nicht nur Vorderräder verschwenkt, sondern auch Hinterräder. Allerdings werden die Hinterräder in entgegengesetzter Richtung zu den Vorderrädern verschwenkt, so dass sich ein gegenläufiger Lenkeinschlag ergibt.

Des Weiteren beschreibt die DE 10 2016 117 382 A1 ein Rutschauto, welches durch Umschwenken eines Lenkgriffs oder durch Gewichtsverlagerung gelenkt werden kann.

Aufgabe der vorliegenden Erfindung ist es, einen Roller der eingangs genannten Art mit einer verbesserten Lenkung zu schaffen und ein entsprechend verbessertes Verfahren zum Bedienen eines solchen Rollers anzugeben.

Diese Aufgabe wird durch einen Roller mit den Merkmalen des Patentanspruchs 1 und durch ein Verfahren mit den Merkmalen des Patentanspruchs 8 gelöst. Vorteilhafte Ausgestaltungen mit zweckmäßigen Weiterbildungen der Erfindung sind in den abhängigen Patentansprüchen angegeben.

Der erfindungsgemäße Roller umfasst ein Trittbrett, durch welches eine Aufstandsfläche für einen Nutzer des Rollers bereitgestellt ist. Eine Vorderachse des Rollers umfasst ein erstes Vorderrad und ein zweites Vorderrad. Eine Hinterachse des Rollers umfasst ein erstes Hinterrad und ein zweites Hinterrad. Der Roller umfasst eine Lenksäule zum Lenken zumindest der Vorderräder. Durch Neigen des Trittbretts um eine Wankachse des Trittbretts ist ein Lenkeinschlag der beiden Vorderräder in eine erste Richtung und zugleich ein Lenkeinschlag der beiden Hinterräder in eine der ersten Richtung entgegengesetzte zweite Richtung bewirkbar. Durch dieses gegengleiche Einschlagen der Vorderräder und der Hinterräder beim Lenken des Rollers lässt sich ein besonders enger Kurvenradius erreichen. Zudem ist so eine besonders schnell ansprechende Lenkung bereitgestellt. Dementsprechend ist ein Roller mit einer verbesserten Lenkung geschaffen.

Das gegengleiche Einschlagen der Vorderräder und der Hinterräder ist durch eine Gewichtsverlagerung des auf dem Trittbrett stehenden Nutzers des Rollers bewirkbar. Die Gewichtsverlagerung hat das Neigen des Trittbretts um die Wankachse oder Längsachse des Trittbretts zur Folge. Wenn die Vorderräder und die Hinterräder beim Lenken eingeschlagen sind, so ist eine Mittelebene des jeweiligen Rads bezogen auf eine Geradeausstellung des jeweiligen Rads um einen den Lenkeinschlag angebenden Lenkwinkel geneigt.

Die Vorderachse und die Hinterachse umfassen einen jeweiligen Querträger, wobei in dem Querträger ein erster Bolzen angeordnet ist, welcher sich in Richtung der Wankachse des Trittbretts erstreckt. Durch Neigen des Trittbretts ist der erste Bolzen in dem Querträger drehbar. Durch das Vorsehen des ersten Bolzens lässt sich besonders einfach sicherstellen, dass durch die Gewichtsverlagerung des auf dem Trittbrett stehenden Nutzers des Rollers, welche das Neigen des Trittbretts um die Wankachse mit sich bringt, der Lenkeinschlag der Vorderräder und der gegengleiche Lenkeinschlag der Hinterräder bewirkt werden kann.

Des Weiteren ist in radialer Richtung des ersten Bolzens beabstandet von dem ersten Bolzen wenigstens ein weiterer Bolzen in einer Aufnahme angeordnet. Die Aufnahme ist in dem Querträger ausgebildet. Hierbei ist zwischen einer die Aufnahme begrenzenden Wandung des Querträgers und dem weiteren Bolzen ein elastisches Element angeordnet. Das elastische Element bewirkt, dass das Trittbrett nicht zu leicht um die Wankachse gekippt beziehungsweise geneigt werden kann, sodass eine gedämpfte Lenkung realisiert ist. Zudem sorgt das elastische Element dafür, dass das Trittbrett wieder in eine nicht geneigte Ausgangsstellung beziehungsweise Ausgangsposition zurückbewegt wird, sobald der Nutzer nicht mehr durch seine Gewichtsverlagerung das Neigen des Trittbretts um die Wankachse bewirkt. Somit ist eine automatische Rückstellung des Trittbretts in seine Ausgangsstellung realisierbar, in welcher das Trittbrett nicht geneigt ist.

Als vorteilhaft hat es sich gezeigt, wenn das elastische Element als den wenigstens einen weiteren Bolzen umschließende Hülse aus einem elastischen Material ausgebildet ist. So ist einerseits der wenigstens eine weitere Bolzen besonders sicher in der Aufnahme aufgenommen. Andererseits kann dann durch das Neigen beziehungsweise Verkippen des Trittbretts der wenigstens eine weitere Bolzen in eine Vielzahl von unterschiedlichen Richtungen bewegt werden. Und in jeder dieser Richtungen bewirkt das elastische Element ein Rückstellen des weiteren Bolzens und damit auch des Trittbretts in seine Ausgangsstellung. In der Ausgangsstellung des wenigstens einen weiteren Bolzens ist das elastische Element nicht komprimiert oder zumindest nahezu unkomprimiert.

Insbesondere können beiderseits des ersten Bolzens ein erster weiterer Bolzen und ein zweiter weiterer Bolzen in jeweiligen Aufnahmen angeordnet sein, welche in dem Querträger ausgebildet sind. Dadurch lässt sich ein besonders gleichmäßiges Rückstellen des Trittbretts in seine nicht geneigte Ausgangsstellung erreichen, in welcher das Trittbrett zum Boden im Wesentlichen horizontal ausgerichtet ist.

Vorzugsweise ist an dem Querträger ein Lenkhebel gehalten, welcher um eine sich in eine Hochrichtung des Querträgers erstreckende Achse bewegbar ist. Der Lenkhebel ist in einem von der Achse beabstandeten Bereich über eine erste Lenkstange mit einem ersten Achsschenkel und über eine zweite Lenkstange mit einem zweiten Achsschenkel verbunden. Ein derartiger, um die sich in Hochrichtung des Querträgers erstreckende Achse bewegbarer Lenkhebel ermöglicht eine sehr direkte und robuste Weitergabe eines Lenkimpulses an die Achsschenkel infolge des Neigens des Trittbretts. So kann auf besonders funktionssichere Art und Weise der Lenkeinschlag der Vorderräder und der gegengleiche Lenkeinschlag der Hinterräder durch das Neigen des Trittbretts erreicht werden.

Vorzugsweise ist an dem ersten Achsschenkel der Vorderachse das erste Vorderrad und an dem zweiten Achsschenkel der Vorderachse das zweite Vorderrad angeordnet. Und an dem ersten Achsschenkel der Hinterachse ist dann das erste Hinterrad und an dem zweiten Achsschenkel der Hinterachse das zweite Hinterrad angeordnet. Hierbei sind die Achsschenkel um jeweilige, in dem Querträger ausgebildete Drehachsen drehbar. Derartige Drehachsen können beispielsweise durch Bolzen oder Stifte bereitgestellt sein, welche durch in dem Querträger ausgebildete Durchtrittsöffnungen oder Bohrungen hindurchgeführt oder in diese eingeführt sind, und welche mit dem jeweiligen Achsschenkel verbunden sind. Dadurch ist die Lenkung im Hinblick auf ihre Robustheit und ihre Funktionssicherheit verbessert.

Die in dem Querträger ausgebildeten Drehachsen der Achsschenkel können insbesondere bezogen auf die Hochrichtung des Querträgers geneigt ausgerichtet sein. Hierbei können die Drehachsen bei auf dem Boden stehenden Roller am Boden einen größeren Abstand voneinander aufweisen als oberhalb des Bodens. Durch eine derartige, zueinander hin geneigte Ausrichtung der Drehachsen lässt sich eine gute Straßenlage des Rollers beim Fahren mit demselben erreichen.

Vorzugsweise ist der Lenkhebel mittels eines in einem Abstand von der Achse angreifenden Übertragungselements um die Achse bewegbar. Hierbei ist eine Ausrichtung des Übertragungselements durch das Neigen des Trittbretts veränderbar. Das Übertragungselement kann beispielsweise als an dem Lenkhebel in dem Abstand von der Achse angreifender Stift oder dergleichen ausgebildet sein, welcher das Bewegen des Lenkhebels um die Achse bewirkt, wenn das Trittbrett durch die Gewichtsverlagerung des auf dem Trittbrett stehenden Nutzers geneigt wird. Auch dies ist einer sehr direkten und schnell ansprechenden Lenkung des Rollers zuträglich. Der Stift ist insbesondere an dem Trittbrett festgelegt.

Vorzugsweise ist die Ausrichtung des an dem Lenkhebel der Vorderachse angreifenden Übertragungselements durch ein Verändern einer Ausrichtung der Lenksäule des Rollers veränderbar. Dann braucht der Nutzer lediglich die Lenksäule um die Wankachse oder Längsachse des Trittbretts zu kippen, um das Neigen des Trittbretts und somit auch das Einschlagen der Vorderräder und zugleich der Hinterräder des Rollers zu bewirken. Dies macht die Lenkung des Rollers besonders einfach.

Der Roller kann eine Bremseinrichtung zum Bremsen einer Drehbewegung wenigstens eines der Hinterräder aufweisen. Beispielsweise kann der Nutzer durch Betätigen eines Bremspedals ein Abbremsen der Hinterräder des Rollers bewirken. Hierbei kann das Niederdrücken des Bremspedals ein Ziehen an einem Seilzug oder dergleichen bewirken, welcher wiederum einen Bremsbelag der Bremseinrichtung gegen eine Bremsscheibe der Bremseinrichtung zieht. So kann auf besonders einfache Weise ein sicheres und komfortables Abbremsen des Rollers bewirkt werden.

Als weiter vorteilhaft hat es sich gezeigt, wenn wenigstens eines der Vorderräder des Rollers mittels wenigstens eines Elektromotors antreibbar ist. Denn dann braucht der Nutzer den Roller nicht allein mit Muskelkraft fortzubewegen. Der wenigstens eine Elektromotor kann beispielsweise als Radnabenmotor ausgebildet sein.

Schließlich hat es sich als vorteilhaft gezeigt, wenn ein zum Versorgen des Elektromotors ausgebildeter elektrischer Energiespeicher an der Lenksäule des Rollers angeordnet ist. Auf diese Weise ist auch bei einem Roller mit elektrischem Antrieb eine verbesserte Lenkung realisiert. Der elektrische Energiespeicher kann als wieder aufladbare Batterie ausgebildet sein.

Bei dem erfindungsgemäßen Verfahren zum Bedienen eines Rollers mit einem Trittbrett, durch welches eine Aufstandsfläche für einen Nutzer des Rollers bereitgestellt ist, mit einer ein erstes Vorderrad und ein zweites Vorderrad umfassenden Vorderachse und einer ein erstes Hinterrad und ein zweites Rad umfassenden Hinterachse, und mit einer Lenksäule zum Lenken zumindest der Vorderräder wird durch Neigen des Trittbretts um eine Wankachse des Trittbretts ein Lenkeinschlag der beiden Vorderräder in eine erste Richtung bewirkt. Zugleich wird durch das Neigen des Trittbretts um die Wankachse ein Lenkeinschlag der beiden Hinterräder in eine der ersten Richtung entgegengesetzte zweite Richtung bewirkt. Dementsprechend ist ein im Hinblick auf die Lenkung verbessertes Verfahren zum Bedienen eines Rollers geschaffen. Die Vorderachse und die Hinterachse umfassen einen jeweiligen Querträger, wobei in dem Querträger ein erster Bolzen angeordnet ist, welcher sich in Richtung der Wankachse des Trittbretts erstreckt, und welcher durch das Neigen des Trittbretts in dem Querträger gedreht wird. In radialer Richtung des ersten Bolzens beabstandet von dem ersten Bolzen sind zwei weitere Bolzen in einer in dem Querträger ausgebildeten Aufnahme angeordnet. Zwischen einer die Aufnahme begrenzenden Wandung des Querträgers und den weiteren Bolzen (36) sind elastische Elemente in Form von Hülsen (40) angeordnet, welche bei dem Neigen des Trittbretts (22) um seine Wankachse (32) durch die weiteren Bolzen (36) komprimiert werden.

Die Erfindung umfasst auch die Kombinationen der beschriebenen Ausführungsformen.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Rollers beschrieben worden sind. Aus diesem Grund sind die entsprechenden Weiterbildungen des erfindungsgemäßen Verfahrens hier nicht noch einmal beschrieben. Der Schutzbereich wird jedoch nur von den anhängenden Ansprüchen definiert.

Im Folgenden sind Ausführungsbeispiele der Erfindung beschrieben. Hierzu zeigt:
- Fig. 1: in einer Perspektivansicht einen Roller mit zwei elektrisch angetriebenen Vorderrädern und zwei nicht angetriebenen, vorzugsweise bremsbaren Hinterrädern;
- Fig. 2: eine Perspektivansicht auf eine Unterseite eines Trittbretts des Rollers sowie auf eine Vorderachse des Rollers und eine Hinterachse des Rollers von vorne unten;
- Fig. 3: eine schematische Ansicht auf die Vorderachse und die Hinterachse des Rollers von unten bei einem Durchfahren einer Rechtskurve mit dem Roller;
- Fig. 4: eine Perspektivansicht von unten auf die Vorderachse des Rollers, wobei auch eine Unterseite des Trittbretts zu sehen ist;
- Fig. 5: eine weitere Perspektivansicht gemäß Fig. 4, wobei ein Querträger der Vorderachse nicht dargestellt ist;
- Fig. 6: eine Perspektivansicht von oben auf die Vorderachse des Rollers ohne den Querträger, wobei auch eine Oberseite des Trittbretts zu sehen ist;
- Fig. 7: eine Horizontalschnittdarstellung des Querträgers im Bereich von in dem Querträger angeordneten Bolzen;
- Fig. 8: eine Ansicht der Vorderachse von unten und eine Ansicht der Vorderachse von vorne bei einer Rechtskurve des Rollers;
- Fig. 9: eine Ansicht der Vorderachse von unten und eine Ansicht der Vorderachse von vorne bei einem Geradeauslauf des Rollers; und
- Fig. 10: eine Ansicht der Vorderachse von unten und eine Ansicht der Vorderachse von vorne bei einer Linkskurve des Rollers.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

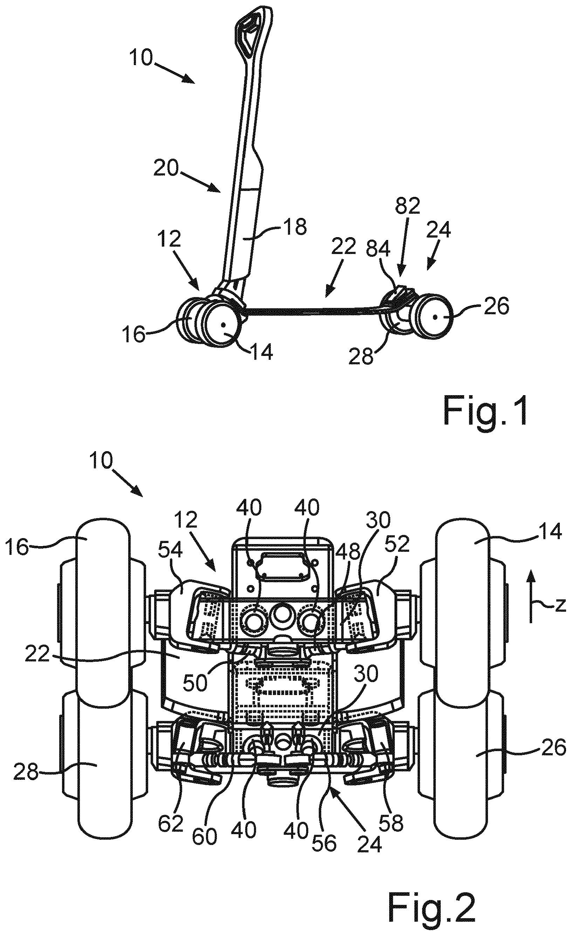

In Fig. 1 ist perspektivisch ein Roller 10 gezeigt, welcher beispielhaft als elektrisch angetriebener Roller 10 ausgebildet ist. Der Roller 10 kann jedoch auch als Tretroller ausgebildet sein, welcher lediglich mit der Muskelkraft eines Nutzers des Rollers 10 fortbewegt wird. Der Roller 10 umfasst eine Vorderachse 12 mit einem ersten Vorderrad 14 und einem zweiten Vorderrad 16. Bei der Ausgestaltung des Rollers 10 als elektrisch antreibbarer Roller sind die Vorderräder 14, 16 mittels jeweiliger (nicht gezeigter) Elektromotoren antreibbar, welche beispielsweise als Radnabenmotoren ausgebildet sein können. In diesem Fall dient eine wieder aufladbare Batterie 18, welche vorzugsweise an einer Lenksäule 20 des Rollers 10 angeordnet ist, der Versorgung der Elektromotoren mit elektrischer Energie.

Der Roller 10 weist ein Trittbrett 22 auf, auf welchem ein Nutzer des Rollers 10 stehen kann. Eine Hinterachse 24 des Rollers 10 umfasst ein erstes Hinterrad 26 und ein zweites Hinterrad 28. Von einer Bremseinrichtung 82 des Rollers 10, welche dem Bremsen einer Drehbewegung der Hinterräder 26, 28 dient, ist in Fig. 1 lediglich ein Bremspedal 84 gezeigt. Aus der Ansicht in Fig. 2 ist ersichtlich, dass die Vorderachse 12 und die Hinterachse 24 einen jeweiligen Querträger 30 umfassen.

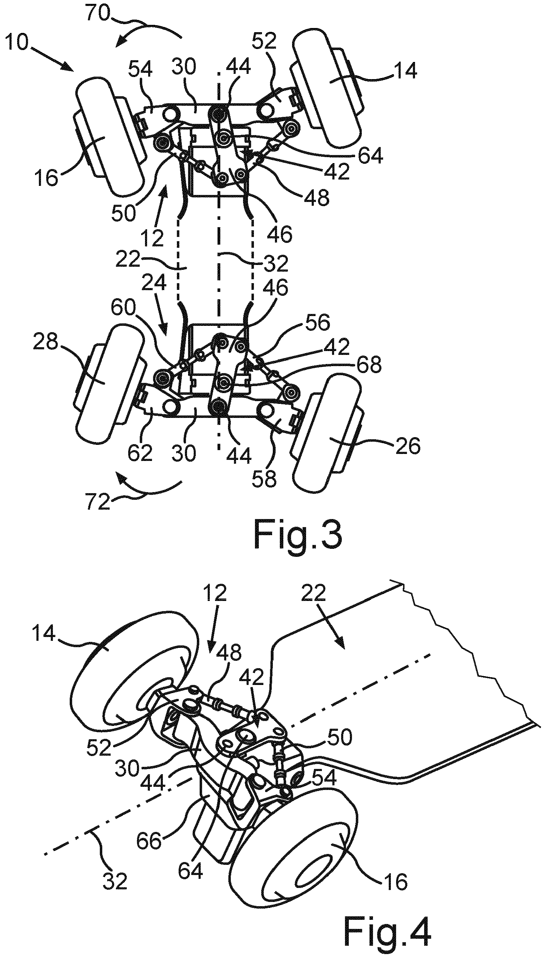

Der Querträger 30 der Vorderachse 12 ist in Fig. 4 in einer Perspektivansicht gezeigt, in welcher auch eine Unterseite des Trittbretts 22 zu sehen ist. Des Weiteren ist in Fig. 3 der jeweilige Querträger 30 in einer Ansicht auf die Vorderachse 12 von unten und auf die Hinterachse 24 von unten zu sehen. In Fig. 3 ist aus Gründen der Übersichtlichkeit das Trittbrett 22 des Rollers 10 nur schematisiert angedeutet.

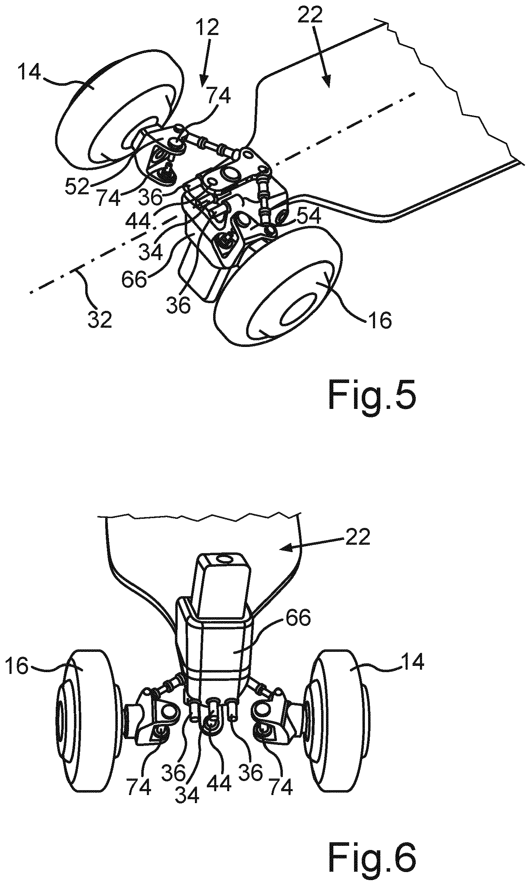

In Fig. 3 ist zudem eine Wankachse 32 des Trittbretts 22 dargestellt, um welche das Trittbrett 22 zum Lenken des Rollers 10 geneigt werden kann. Die einer Längsachse des Trittbretts 22 entsprechende Wankachse 32 ist auch in Fig. 4 und in Fig. 5 gezeigt. Aus Fig. 5 ist ersichtlich, dass die Wankachse 32 sich in Richtung eines ersten Bolzens 34 erstreckt, welcher in dem Querträger 30 angeordnet ist. Beim Neigen des Trittbretts 22 um die Wankachse 32 durch Gewichtsverlagerung des auf dem Trittbrett 22 stehenden Nutzers dreht sich der erste Bolzen 34 in dem Querträger 30.

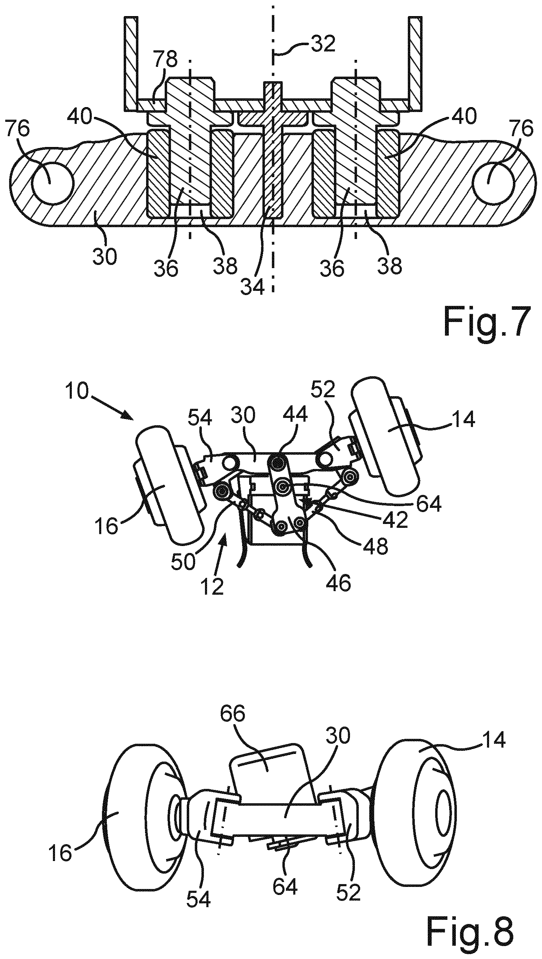

Aus Fig. 5 und Fig. 6, jedoch insbesondere aus Fig. 7 ist ersichtlich, dass in radialer Richtung des ersten Bolzens 34 von dem ersten Bolzen 34 beabstandet zwei weitere Bolzen 36 in entsprechenden Aufnahmen 38 angeordnet sind, welche in dem Querträger 30 ausgebildet sind. Der erste Bolzen 34 und die weiteren Bolzen 36 sind in Fig. 5 und Fig. 6 ohne den Querträger 30 dargestellt. In den jeweiligen Aufnahmen 38, welche in dem Querträger 30 ausgebildet sind, sind elastische Elemente in Form von jeweiligen Hülsen 40 angeordnet, welche aus einem elastischen Material beziehungsweise einem Elastomer gebildet sind (vergleiche Fig. 7).

Bei einem Neigen des Trittbretts 22 um seine Wankachse 32 komprimieren die sich ebenfalls parallel zu der Wankachse 32 erstreckenden weiteren Bolzen 36 die aus dem elastischen Material gebildeten Hülsen 40. Dies sorgt einerseits für eine Dämpfung des Fahrwerks des Rollers 10 beim Lenken desselben und andererseits für eine automatische Rückstellung des Trittbretts 22 in seine nicht ausgelenkte beziehungsweise nicht geneigte Ausgangsposition, in welcher das Trittbrett 22 im Wesentlichen eben zu einem Boden ausgerichtet ist, auf welchem der Roller 10 steht oder rollt.

Mit Bezug auf Fig. 3 soll die Lenkung des Rollers 10 durch Gewichtsverlagerung des auf der Oberseite des Trittbretts 22 stehenden Nutzers erläutert werden. An dem Querträger 30, vorliegend an einer Unterseite des Querträgers 30, ist ein plattenförmiger Lenkhebel 42 gehalten. Der Lenkhebel 42 ist um eine Achse 44 bewegbar, welche sich in eine Hochrichtung z des Querträgers 30 erstreckt. Die Hochrichtung z ist in Fig. 2 durch einen Pfeil veranschaulicht. In einem von dieser Achse 44 beabstandeten Bereich 46 des Lenkhebels 42 ist eine erste Lenkstange 48 und eine zweite Lenkstange 50 mit dem Lenkhebel 42 der Vorderachse 12 verbunden. Gemäß Fig. 3 ist der Lenkhebel 42 der Vorderachse 12 über die erste Lenkstange 48 mit einem ersten Achsschenkel 52 verbunden, an welchem das erste Vorderrad 14 angeordnet ist. Des Weiteren ist die zweite Lenkstange 50 der Vorderachse 12 mit einem zweiten Achsschenkel 54 verbunden, an welchem das zweite Vorderrad 16 angeordnet ist.

In analoger Weise ist an dem von der Achse 44 beabstandeten Bereich 46 des Lenkhebels 42 der Hinterachse 24 eine erste Lenkstange 56 befestigt, über welche der Lenkhebel 42 der Hinterachse 24 mit einem ersten Achsschenkel 58 der Hinterachse 24 verbunden ist. An dem ersten Achsschenkel 58 ist das erste Hinterrad 26 angeordnet. Des Weiteren ist der Lenkhebel 42 über eine weitere Lenkstange 60 mit einem zweiten Achsschenkel 62 der Hinterachse 24 verbunden. An dem zweiten Achsschenkel 62 der Hinterachse 24 ist das zweite Hinterrad 28 angeordnet.

Wenn das Trittbrett 22 um seine Wankachse 32 geneigt wird, so bewirkt ein Übertragungselement 64 eine Bewegung, insbesondere eine Schwenkbewegung des Lenkhebels 42 der Vorderachse 12 um die Achse 44. Das Übertragungselement 64, welches in Fig. 3 und Fig. 4 lediglich im Hinblick auf seine Position an der Vorderachse 12 dargestellt ist, kann beispielsweise als mit dem Trittbrett 22 gekoppelter Stift ausgebildet sein, welcher in dem Abstand von der Achse 44 an dem Lenkhebel 42 der Vorderachse 12 angreift. An der Vorderachse 12 kann die Ausrichtung dieses Übertragungselements 64 auch durch Verändern einer Ausrichtung der Lenksäule 20 des Rollers 10 verändert werden. Hierfür ist die Lenksäule 20 mit einer Konsole 66 gekoppelt, welche im Bereich der Vorderachse 12 angeordnet ist (vergleiche insbesondere Fig. 4 und Fig. 6). Der mit dem Trittbrett 22 gekoppelte Stift beziehungsweise ein derartiges Übertragungselement 64 fluchtet hierbei bevorzugt mit einer Längsachse der Lenksäule 20.

Im Bereich der Hinterachse 24 ist ein dem Übertragungselement 64 der Vorderachse 12 analoges Übertragungselement 68 vorgesehen, welches mit dem Trittbrett 22 gekoppelt ist. Auch dieses Übertragungselement 68 ist in Fig. 3 lediglich im Hinblick auf seine Position an der Hinterachse 24 dargestellt und kann beispielsweise als mit dem Trittbrett 22 gekoppelter Stift ausgebildet sein, welcher in dem Abstand von der Achse 44 an dem Lenkhebel 42 der Hinterachse 24 angreift.

Das Bewegen des Lenkhebels 42 der Vorderachse 12 um die Achse 44 bewirkt einen Lenkeinschlag der beiden Vorderräder 14, 16 in eine erste Richtung 70, welche in Fig. 3 durch einen gekrümmten Pfeil veranschaulicht ist. In analoger Weise bewirkt das Bewegen des Lenkhebels 42 der Hinterachse 24 um die Achse 44 einen Lenkeinschlag der beiden Hinterräder 26, 28 in eine zweite Richtung 72, welche der ersten Richtung 70 entgegengesetzt ist. Die zweite Richtung 72 ist in Fig. 3 durch einen weiteren gekrümmten Pfeil veranschaulicht. Durch dieses gegengleiche Einschlagen der Vorderräder 14, 16 und der Hinterräder 26, 28 kann mit dem Roller 10 ein besonders enger Kurvenradius gefahren werden.

Die mit dem Lenkeinschlag der Vorderräder 14, 16 und der Hinterräder 26, 28 einhergehende Lenkung kann bei dem Roller 10 durch Gewichtsverlagerung des auf der Oberseite des Trittbretts 22 stehenden Nutzers bewirkt werden. Der Nutzer bewirkt nämlich durch seine Gewichtsverlagerung, dass sich das Trittbrett 22 um die Wankachse 32 neigt. Über die Lenkstangen 48, 50, 56, 60 wird hierbei der Lenkimpuls an die Achsschenkel 52, 54, 58, 62 weitergegeben. Die Lenkung wird über alle vier Räder des Rollers 10 realisiert. Insbesondere erfolgt die Lenkung aller vier Räder, also der beiden Vorderräder 14, 16 und der beiden Hinterräder 26, 28 durch die Gewichtsverlagerung des auf dem Trittbrett 22 stehenden Nutzers.

Aus Fig. 3 ist des Weiteren ersichtlich, dass die Bereiche 46 der Lenkhebel 42 der Vorderachse 12 und der Hinterachse 24, an welchen die Lenkstangen 48, 50, 56, 60 befestigt sind, einander zugewandt sind. Diese Bereiche 46 der beiden Lenkhebel 42 sind also einander näher als die beiden Achsen 44 der beiden Lenkhebel 42.

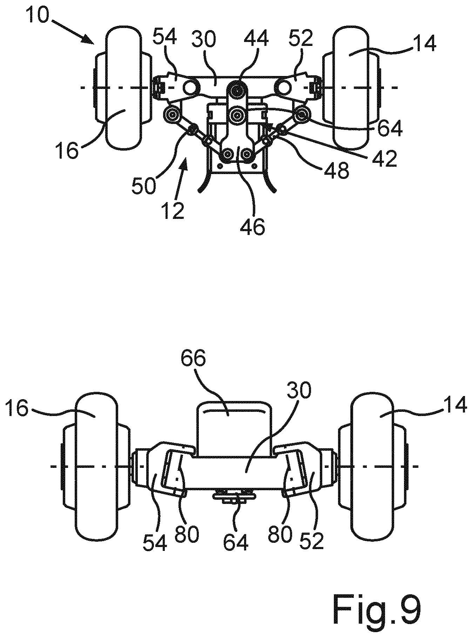

Insbesondere aus Fig. 5 ist gut ersichtlich, dass die Achsschenkel 52, 54 der Vorderachse 12 um jeweilige Drehachsen 80 drehbar sind, welche in dem Querträger 30 ausgebildet sind (vergleiche Fig. 9). Diese bevorzugt geneigten Drehachsen 80 können, wie vorliegend beispielhaft gezeigt, durch Stifte 74 bereitgestellt sein, welche durch die Achsschenkel 52, 54 hindurchtreten und in entsprechende Bohrungen oder Durchtrittsöffnungen 76 eingeführt sind, welche in dem Querträger 30 ausgebildet sind (vergleiche Fig. 7).

Aus Fig. 6 ist gut ersichtlich, dass der Lenkhebel 42 im Bereich der Achse 44 eine Durchtrittsöffnung aufweisen kann, um den Lenkhebel 42 in dem Bereich der Achse 44 an dem Querträger 30 drehbar zu befestigen.

Aus der Horizontalschnittansicht des Querträgers 30 in Fig. 7 sind die Durchtrittsöffnungen 76 besonders gut erkennbar, durch welche die Stifte 74 (vergleiche Fig. 5) hindurchgeführt sind, um die Achsschenkel 52, 54 um die Drehachsen 80 drehbar an dem Querträger 30 zu befestigen. Des Weiteren ist aus Fig. 7 gut ersichtlich, dass die Bolzen 34, 36 über ein Profilteil 78 oder dergleichen mit dem Trittbrett 22 verbunden sein können, damit die Kippbewegung beziehungsweise das Neigen des Trittbretts 22 um die Wankachse 32 die Bewegung der weiteren Bolzen 36 in den jeweiligen Aufnahmen 38 und die Drehung des ersten Bolzens 34 um die Wankachse 32 besonders einfach bewirken kann.

Aus Fig. 8 ist gut ersichtlich, dass durch Kippen der Lenksäule 20, welche mit der Konsole 66 gekoppelt ist, der Lenkeinschlag der Vorderräder 14, 16 beim Durchfahren einer Rechtskurve bewirkt kann.

Gemäß Fig. 9 ist bei einer Geradeausfahrt beziehungsweise einem Geradeauslauf des Rollers 10 das Trittbrett 22 nicht geneigt. Somit sind dann auch die Lenksäule 20 und die Konsole 66 im Wesentlichen vertikal ausgerichtet. Aus Fig. 9 geht jedoch besonders gut die geneigte Ausrichtung der Drehachsen 80 hervor, welche durch die in die Durchtrittsöffnungen 76 des Querträgers 30 (vergleiche Fig. 7) eingeführten Stifte 74 (vergleiche Fig. 5) bereitgestellt sind.

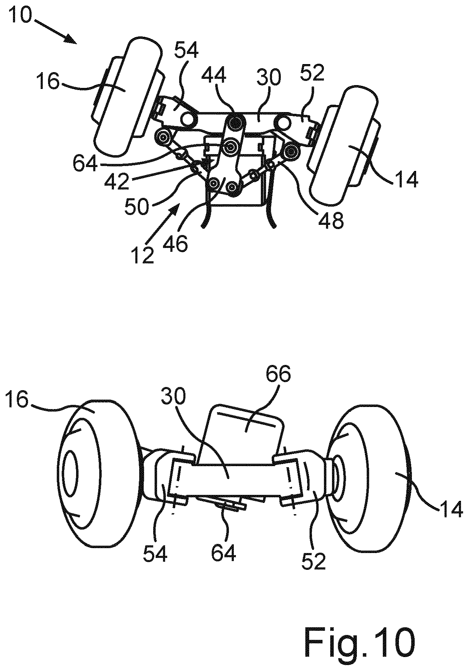

Und aus Fig. 10 geht hervor, wie durch Neigung des Trittbretts 22 um die Wankachse 32 in die der Richtung gemäß Fig. 8 entgegengesetzte Richtung das Durchfahren einer Linkskurve mit dem Roller 10 bewirkt werden kann. Das Neigen des Trittbretts 22 um die Wankachse 32 durch Gewichtsverlagerung des Nutzers kann durch ein entsprechendes Verkippen der Lenksäule 20 unterstützt werden, welche der Nutzer hierfür an einem Griffteil der Lenksäule 20 halten kann.

Insgesamt zeigen die Beispiele, wie durch ein entsprechendes Achssystem des Rollers 10 vorne und hinten auch bei einem elektrisch betriebenen Roller 10 beziehungsweise Scooter eine Lenkung durch Gewichtsverlagerung mit automatischer Rückstellung erreicht werden kann.

## Patentansprüche

1. Roller mit einem Trittbrett (22), durch welches eine Aufstandsfläche für einen Nutzer des Rollers (10) bereitgestellt ist, mit einer ein erstes Vorderrad (14) und ein zweites Vorderrad (16) umfassenden Vorderachse (12) und einer ein erstes Hinterrad (26) und ein zweites Hinterrad (28) umfassenden Hinterachse (24), und mit einer Lenksäule (20) zum Lenken zumindest der Vorderräder (14, 16),
wobei durch Neigen des Trittbretts (22) um eine Wankachse (32) des Trittbretts (22) ein Lenkeinschlag der beiden Vorderräder (14, 16) in eine erste Richtung (70) und zugleich ein Lenkeinschlag der beiden Hinterräder (26, 28) in eine der ersten Richtung (70) entgegengesetzte zweite Richtung (72) bewirkbar ist, wobei die Vorderachse (12) und die Hinterachse (24) einen jeweiligen Querträger (30) umfassen, und wobei in dem Querträger (30) ein erster Bolzen (34) angeordnet ist, welcher sich in Richtung der Wankachse (32) des Trittbretts (22) erstreckt, und welcher durch das Neigen des Trittbretts (22) in dem Querträger (30) drehbar ist,
**dadurch gekennzeichnet, dass**
in radialer Richtung des ersten Bolzens (34) beabstandet von dem ersten Bolzen (34) wenigstens ein weiterer Bolzen (36) in einer in dem Querträger (30) ausgebildeten Aufnahme (38) angeordnet ist, wobei zwischen einer die Aufnahme (38) begrenzenden Wandung des Querträgers (30) und dem weiteren Bolzen (36) ein elastisches Element (40) angeordnet ist.

2. Roller nach Anspruch 1,
**dadurch gekennzeichnet, dass**
das elastische Element (40) als den wenigstens einen weiteren Bolzen (36) umschließende Hülse aus einem elastischen Material ausgebildet ist.

3. Roller nach einem der Ansprüche 1 bis 2,
**dadurch gekennzeichnet, dass**
an dem Querträger (30) ein Lenkhebel (42) gehalten ist, welcher um eine sich in eine Hochrichtung (z) des Querträgers (30) erstreckende Achse (44) bewegbar ist, und welcher in einem von der Achse (44) beabstandeten Bereich (46) über eine erste Lenkstange (48, 56) mit einem ersten Achsschenkel (52, 58) und über eine zweite Lenkstange (50, 60) mit einem zweiten Achsschenkel (54, 62) verbunden ist.

4. Roller nach Anspruch 3,
**dadurch gekennzeichnet, dass**
an dem ersten Achsschenkel (52) der Vorderachse (12) das erste Vorderrad (14) und an dem zweiten Achsschenkel (54) der Vorderachse (12) das zweite Vorderrad (16) beziehungsweise an dem ersten Achsschenkel (58) der Hinterachse (24) das erste Hinterrad (26) und an dem zweiten Achsschenkel (62) der Hinterachse (24) das zweite Hinterrad (28) angeordnet ist, wobei die Achsschenkel (52, 54, 58, 62) um jeweilige, in dem Querträger (30) ausgebildete, insbesondere bezogen auf die Hochrichtung (z) des Querträgers (30) geneigte, Drehachsen (80) drehbar sind.

5. Roller nach Anspruch 3 oder 4,
**dadurch gekennzeichnet, dass**
der Lenkhebel (42) mittels eines in einem Abstand von der Achse (44) angreifenden Übertragungselements (64) um die Achse (44) bewegbar ist, wobei eine Ausrichtung des Übertragungselements (64) durch das Neigen des Trittbretts (22) veränderbar ist.

6. Roller nach Anspruch 5,
**dadurch gekennzeichnet, dass**
die Ausrichtung des an dem Lenkhebel (42) der Vorderachse (12) angreifenden Übertragungselements (64) durch ein Verändern einer Ausrichtung der Lenksäule (20) des Rollers (10) veränderbar ist.

7. Roller nach einem der vorhergehenden Ansprüche,
**dadurch gekennzeichnet, dass**
der Roller (10) eine Bremseinrichtung zum Bremsen einer Drehbewegung wenigstens eines der Hinterräder (26, 28) aufweist und/oder wenigstens eines der Vorderräder (14, 16) mittels wenigstens eines Elektromotors antreibbar ist, wobei ein zum Versorgen des Elektromotors ausgebildeter elektrischer Energiespeicher (18) an der Lenksäule (20) angeordnet ist.

8. Verfahren zum Bedienen eines Rollers (10) mit einem Trittbrett (22), durch welches eine Aufstandsfläche für einen Nutzer des Rollers (10) bereitgestellt ist, mit einer ein erstes Vorderrad (14) und ein zweites Vorderrad (16) umfassenden Vorderachse (12) und einer ein erstes Hinterrad (26) und ein zweites Hinterrad (28) umfassenden Hinterachse (24), und mit einer Lenksäule (20) zum Lenken zumindest der Vorderräder (14, 16),
wobei durch Neigen des Trittbretts (22) um eine Wankachse (32) des Trittbretts (22) ein Lenkeinschlag der beiden Vorderräder (14, 16) in eine erste Richtung (70) und zugleich ein Lenkeinschlag der beiden Hinterräder (26, 28) in eine der ersten Richtung (70) entgegengesetzte zweite Richtung (72) bewirkt wird, wobei die Vorderachse (12) und die Hinterachse (24) einen jeweiligen Querträger (30) umfassen, und wobei in dem Querträger (30) ein erster Bolzen (34) angeordnet ist, welcher sich in Richtung der Wankachse (32) des Trittbretts (22) erstreckt, und welcher durch das Neigen des Trittbretts (22) in dem Querträger (30) gedreht wird,
**dadurch gekennzeichnet, dass**
in radialer Richtung des ersten Bolzens (34) beabstandet von dem ersten Bolzen (34) zwei weitere Bolzen (36) in einer in dem Querträger (30) ausgebildeten Aufnahme (38) angeordnet sind, wobei zwischen einer die Aufnahme (38) begrenzenden Wandung des Querträgers (30) und den weiteren Bolzen (36) elastische Elemente in Form von Hülsen (40) angeordnet sind, welche bei dem Neigen des Trittbretts (22) um seine Wankachse (32) durch die weiteren Bolzen (36) komprimiert werden.

## Claims

1. Scooter with a footboard (22) providing a contact surface for a user of the scooter (10), with a front axle (12) comprising a first front wheel (14) and a second front wheel (16) and a rear axle (24) comprising a first rear wheel (26) and a second rear wheel (28), and with a steering column (20) for steering at least the front wheels (14, 16),
wherein inclining the footboard (22) about a roll axis (32) of the footboard (22) brings about a steering angle of the two front wheels (14, 16) in a first direction (70) and at the same time a steering angle of the two rear wheels (26, 28) in a second direction (72) opposed to the first direction (70), wherein the front axle (12) and the rear axle (24) each comprise a respective transverse beam (30), and wherein a first bolt (34) is arranged in the transverse beam (30), which bolt extends in the direction of the roll axis (32) of the footboard (22) and is rotatable in the transverse beam (30) by inclining the footboard (22),
**characterised in that**
at least one further bolt (36) spaced apart from the first bolt (34) in the radial direction of the first bolt (34) is arranged in a receptacle (38) formed in the transverse beam (30), wherein an elastic element (40) is arranged between a wall of the transverse beam (30), said wall delimiting the receptacle (38), and the further bolt (36).

2. Scooter according to claim 1,
**characterised in that**
the elastic element (40) is formed as a sleeve (36) which encloses the at least one further bolt and is formed from an elastic material.

3. Scooter according to any one of claims 1 to 2,
**characterised in that**
a steering lever (42) is retained on the transverse beam (30), which steering lever is movable about an axis (44) extending in a vertical direction (z) of the transverse beam (30), and which steering lever is connected, in a region (46) spaced apart from the axis (44), to a first steering knuckle (52, 58) via a first steering rod (48, 56) and to a second steering knuckle (54, 62) via a second steering rod (50, 60).

4. Scooter according to claim 3,
**characterised in that**
the first front wheel (14) is arranged on the first steering knuckle (52) of the front axle (12) and the second front wheel (16) is arranged on the second steering knuckle (54) of the front axle (12), and/or the first rear wheel (26) is arranged on the first steering knuckle (58) of the rear axle (24) and the second rear wheel (28) is arranged on the second steering knuckle (62) of the rear axle (24), wherein the steering knuckles (52, 54, 58, 62) are rotatable about respective axes of rotation (80) which are formed in the transverse beam (30) and are inclined in particular with respect to the vertical direction (z) of the transverse beam (30).

5. Scooter according to claim 3 or 4,
**characterised in that**
the steering lever (42) is movable about the axis (44) by means of a transmission element (64) engaging at a distance from the axis (44), wherein an orientation of the transmission element (64) can be changed by inclining the footboard (22).

6. Scooter according to claim 5,
**characterised in that**
the orientation of the transmission element (64) engaging the steering lever (42) of the front axle (12) can be changed by changing an orientation of the steering column (20) of the scooter (10).

7. Scooter according to any one of the preceding claims,
**characterised in that**
the scooter (10) has a braking apparatus for braking a rotational movement of at least one of the rear wheels (26, 28) and/or at least one of the front wheels (14, 16) can be driven by means of at least one electric motor, wherein an electrical energy storage device (18) designed to power the electric motor is arranged on the steering column (20).

8. Method for operating a scooter (10) with a footboard (22) providing a contact surface for a user of the scooter (10), with a front axle (12) comprising a first front wheel (14) and a second front wheel (16) and a rear axle (24) comprising a first rear wheel (26) and a second rear wheel (28), and with a steering column (20) for steering at least the front wheels (14, 16),
wherein inclining the footboard (22) about a roll axis (32) of the footboard (22) brings about a steering angle of the two front wheels (14, 16) in a first direction (70) and at the same time a steering angle of the two rear wheels (26, 28) in a second direction (72) opposed to the first direction (70), wherein the front axle (12) and the rear axle (24) each comprise a respective transverse beam (30), and wherein a first bolt (34) is arranged in the transverse beam (30), which bolt extends in the direction of the roll axis (32) of the footboard (22) and is rotated in the transverse beam (30) by inclining the footboard (22),
**characterised in that**
two further bolts (36) spaced apart from the first bolt (34) in the radial direction of the first bolt (34) are arranged in a receptacle (38) formed in the transverse beam (30),
wherein, between a wall of the transverse beam (30), said wall delimiting the receptacle (38), and the further bolt (36), elastic elements in the form of sleeves (40) are arranged, which elements are compressed by the further bolts (36) when the footboard (22) is inclined about its roll axis (32).

## Revendications

1. Trottinette avec une planche (22), par laquelle une surface de support pour un utilisateur de la trottinette (10) est fournie, avec un essieu avant (12) comprenant une première roue avant (14) et une seconde roue avant (16) et un essieu arrière (24) comprenant une première roue arrière (26) et une seconde roue arrière (28), et avec une colonne de direction (20) pour la direction au moins des roues avant (14, 16),
dans laquelle par inclinaison de la planche (22) autour d'un axe de roulement (32) de la planche (11), un angle de braquage des deux roues avant (14, 16) peut être provoqué dans une première direction (70) et à la fois un angle de braquage des deux roues arrière (26, 28) dans une seconde direction (72) opposée à la première direction (70), dans laquelle l'essieu avant (12) et l'essieu arrière (24) comportent une poutre transversale (30) respective, et dans laquelle un premier boulon (34) est agencé dans la poutre transversale (30), lequel s'étend en direction de l'axe de roulement (32) de la planche (22), et lequel peut être tourné par l'inclinaison de la planche (22) dans la poutre transversale (30),
**caractérisée en ce que**
au moins un autre boulon (36) est agencé dans un logement (38) réalisé dans la poutre transversale (30) en direction radiale du premier boulon (34) à distance du premier boulon (34), dans laquelle un élément élastique (40) est agencé entre une paroi limitant le logement (38) de la poutre transversale (30) et l'autre boulon (36).

2. Trottinette selon la revendication 1,
**caractérisée en ce que**
l'élément (40) élastique est réalisé comme une douille en un matériau élastique entourant l'au moins un autre boulon (36).

3. Trottinette selon l'une quelconque des revendications 1 à 2,
**caractérisée en ce que**
un levier de direction (42) est maintenu au niveau de la poutre transversale (30), lequel est mobile autour d'un axe (44) s'étendant dans un sens vertical (z) de la poutre transversale (30), et lequel est relié dans une zone (46) espacée de l'axe (44) par le biais d'une première bielle de direction (48, 56) à une première fusée d'essieu (52, 58) et par le biais d'une seconde bielle de direction (50, 60) à une seconde fusée d'essieu (54, 62).

4. Trottinette selon la revendication 3,
**caractérisée en ce que**
la première roue avant (14) est agencée au niveau de la première fusée d'essieu (52) de l'essieu avant (12) et la seconde roue avant (16) est agencée au niveau de la seconde fusée d'essieu (54) de l'essieu avant (12) ou la première roue arrière (26) est agencée au niveau de la première fusée d'essieu (58) de l'essieu arrière (24) et la seconde roue arrière (28) est agencée au niveau de la seconde fusée d'essieu (62) de l'essieu arrière (24), dans laquelle les fusées d'essieu (52, 54, 58, 62) sont rotatives autour d'axes de rotation (80) respectifs, inclinés en particulier par rapport au sens vertical (z) de la poutre transversale (30).

5. Trottinette selon la revendication 3 ou 4,
**caractérisée en ce que**
le levier de direction (42) est mobile au moyen d'un élément de transmission (64) agissant à une distance de l'essieu (44) autour de l'essieu (44), dans laquelle une orientation de l'élément de transmission (64) est modifiable par l'inclinaison de la planche (22).

6. Trottinette selon la revendication 5,
**caractérisée en ce que**
l'orientation de l'élément de transmission (64) agissant sur le levier de direction (42) de l'essieu avant (12) est modifiable par une modification d'une orientation de la colonne de direction (20) de la trottinette (1).

7. Trottinette selon l'une quelconque des revendications précédentes,
**caractérisée en ce que**
la trottinette (10) présente un dispositif de freinage pour le freinage d'un mouvement de rotation au moins d'une des roues arrière (26, 28) et/ou au moins une des roues avant (14, 16) est entraînable au moyen d'au moins un moteur électrique, dans laquelle un accumulateur d'énergie électrique (18) réalisé pour l'alimentation du moteur électrique est agencé au niveau de la colonne de direction (20).

8. Procédé de commande d'une trottinette (10) avec une planche (22), par laquelle une surface de support pour un utilisateur de la trottinette (10) est fournie, avec un essieu avant (12) comprenant une première roue avant (14) et une seconde roue avant (16) et un essieu arrière (24) comprenant une première roue arrière (26) et une seconde roue arrière (28), et avec une colonne de direction (20) pour la direction au moins des roues avant (14, 16),
dans lequel par inclinaison de la planche (22) autour d'un axe de roulement (32) de la planche (11), un angle de braquage des deux roues avant (14, 16) est provoqué dans une première direction (70) et à la fois un angle de braquage des deux roues arrière (26, 28) dans une seconde direction (72) opposée à la première direction (70), dans lequel l'essieu avant (12) et l'essieu arrière (24) comportent une poutre transversale (30) respective, et dans lequel un premier boulon (34) est agencé dans la poutre transversale (30), lequel s'étend en direction de l'axe de roulement (32) de la planche (22), et lequel est tourné par l'inclinaison de la planche (22) dans la poutre transversale (30),
**caractérisée en ce que**
deux autres boulons (36) sont agencés dans un logement (38) réalisé dans la poutre transversale (30) en direction radiale du premier boulon (34) à distance du premier boulon (34),
dans lequel des éléments élastiques sous la forme de douille (40) sont agencés entre une paroi limitant le logement (38) de la poutre transversale (30) et les autres boulons (36), lesquels sont comprimés lors de l'inclinaison de la planche (22) autour de son axe de roulement (32) par les autres boulons (36).
